# EUROPÄISCHE PATENTSCHRIFT

(11) **EP 4 526 149 B1**
(45) Veröffentlichungstag und Bekanntmachung des Hinweises auf die Patenterteilung: **17.06.2026**
(21) Anmeldenummer: 23702225.6
(22) Anmeldetag: 10.01.2023
(51) Int. Cl.: B60L 3/04, B60L 9/00

(54) **MULTIKONTAKT-ERDUNGSTRENNER FÜR EIN SCHIENENFAHRZEUG**
MULTI-CONTACT GROUNDING SWITCH FOR A RAIL VEHICLE
COMMUTATEUR DE MISE À LA TERRE À CONTACTS MULTIPLES POUR UN VÉHICULE FERROVIAIRE

(30) Priorität: 18.07.2022 DE 102022207315
(43) Veröffentlichungstag der Anmeldung: 26.03.2025
(73) Patentinhaber: Siemens Mobility GmbH, 80997 München (DE)
(72) Erfinder: MEHLAN, Markus, 85757 Karlsfeld (DE); PINTSCHER, Frank, 91334 Hemhofen (DE)
(74) Vertreter: Siemens Patent Attorneys
(86) Internationale Anmeldenummer: PCT/EP2023/050424
(87) Internationale Veröffentlichungsnummer: WO 2024/017509

(56) Entgegenhaltungen:
- EP-A1- 2 340 958
- EP-A1- 2 792 530
- EP-A1- 3 703 091
- EP-B1- 1 994 538
- DE-C2- 3 312 477

## Beschreibung

Die Erfindung betrifft eine Schaltungsanordnung mit einem Multikontakt-Erdungstrenner. Außerdem betrifft die Erfindung ein Schienenfahrzeug mit einer solchen Schaltungsanordnung. Zudem betrifft die Erfindung ein Verfahren zum Herstellen einer Schaltungsanordnung mit einem Multikontakt-Erdungstrenner.

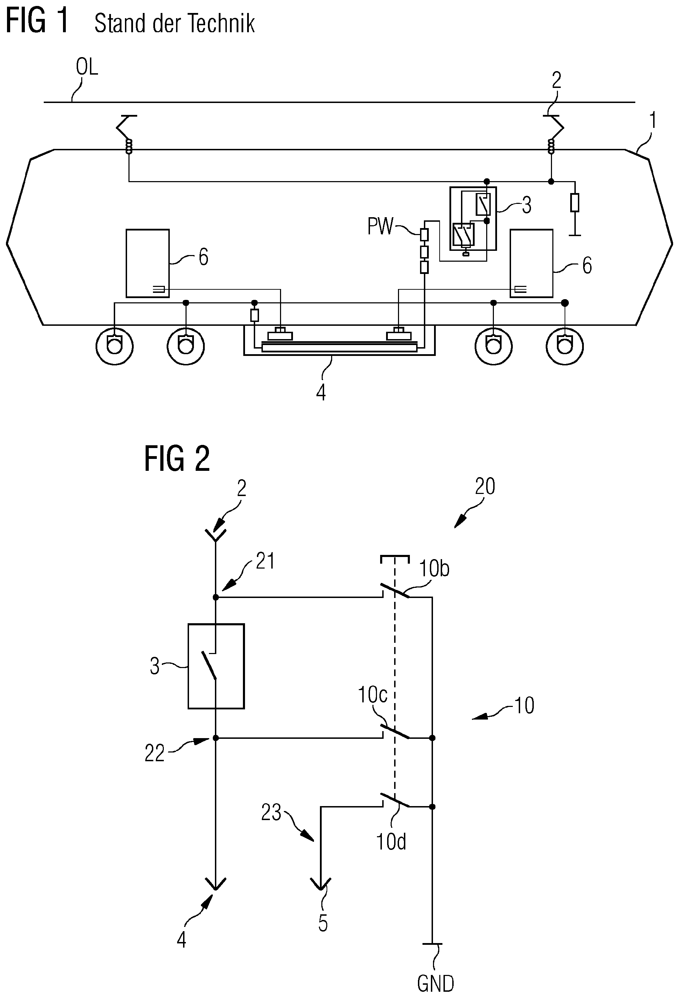

Bei dem Betrieb eines elektrischen Schienenfahrzeugs wird elektrischer Strom über einen sogenannten Primärstromkreis zur Verfügung gestellt. Der Primärstromkreis wird von hochgespanntem Primärstrom aus der Oberleitung durchflossen. Dieser Primärstrom wird von einem Stromabnehmer aufgenommen und durch einen Haupttransformator auf eine niedrigere elektrische Spannung heruntertransformiert. Die niedrigere elektrische Spannung wird anschließend über einen Vierquadrantensteller in eine Zwischenkreis-Gleichspannung für einen Traktionszwischenkreis umgewandelt. Von dem Traktionszwischenkreis aus werden die Fahrmotoren, die mit Drehstrom betrieben werden, über einen Pulswechselrichter mit Drehstrom versorgt. Eine solche Anordnung ist in FIG 1 dargestellt.

Die einzelnen Wagen eines Reisezugs werden über eine sogenannte Zugsammelschiene von zentraler Stelle, beispielsweise von der Lokomotive aus, mit elektrischer Energie versorgt. Den Rückleiter der Zugsammelschiene bilden die Schienen. Auf Triebfahrzeugen, die mit Wechselstrom versorgt werden, weist in der Regel der Haupttransformator eine sogenannte Zugsammelschienenwicklung auf, aus der die Zugsammelschiene mit Wechselstrom versorgt wird. Übliche Spannungswerte sind hier 1 kV (bei einer Hochspannungseinspeisung mit 15 kV und 16,7 Hz) bzw. 1,5 kV (bei einer Hochspannungseinspeisung mit 25 kV und 50 Hz). Bei Gleichstromversorgung wird die Zugsammelschiene direkt aus der Oberleitung gespeist. Die Spannung in der Zugsammelschiene variiert in diesem Fall zwischen 1500 und 3000 Volt.

In dem Primärstromkreis befindet sich auch ein Hauptschalter, mit dem der Haupttransformator vom Stromnetz bzw. vom Stromabnehmer getrennt werden kann. Werden Arbeiten an einem Stromkreis mit hoher elektrischer Spannung von mehr als 1000 V durchgeführt, so müssen die spannungsführenden Teile des Stromkreises freigeschaltet und geerdet werden. Diese Erdung muss also insbesondere bei Arbeiten an der Hochspannungseinspeisung und der Zugsammelschiene eines Schienenfahrzeugs erfolgen. Auch zum Kuppeln der Zugsammelschiene muss der betreffende Stromkreis freigeschaltet und geerdet werden. Da die Hochspannungseinspeisung und die Zugsammelschiene unterschiedliche Spannungsebenen besitzen, sind zwei getrennte Erdungstrenner erforderlich. Beide Erdungstrenner sind mit einem Schließsystem verriegelt, werden manuell betätigt und müssen so angebracht sein, dass sie vom Triebfahrzeugführer und von Wartungspersonal bedient werden können.

Bisher erfolgt bei einer Mehrsystem-Lokomotive die Erdung der Wechselstrom-Hochspannungskreise durch einen separaten AC-Erdungstrenner (AC = Wechselstrom) und die Erdung der Gleichstrom-Hochspannungskreise und der Zugsammelschiene erfolgt durch einen separaten DC-Erdungstrenner (DC = Gleichstrom).

Bei einer Gleichstrom-Lokomotive werden die DC-Hochspannungskreise und die Zugsammelschiene ebenfalls mit dem DC-Erdungstrenner geerdet.

Bei einer Wechselstrom-Lokomotive werden bisher die Wechselstrom-Hochspannungskreise durch einen AC-Erdungstrenner geerdet. Eine Erdung der Zugsammelschiene erfolgt nicht. Stattdessen wird der Schutz des Personals beim Kuppeln der Zugsammelschiene durch betriebliche Anweisungen erreicht.

In EP 2 792 530 A1 ist ein Antriebssystem eines elektrischen Fahrzeugs beschrieben. Das Antriebssystem umfasst einen Trennschalter, einen Spannungskonverter und einen Erdungsschalter. Der Erdungsschalter weist zwei Erdungskontakteinheiten auf, welche mit einem Eingang und einem Ausgang des Trennschalters verbunden sind. Der Erdungsschalter umfasst auch eine weitere Kontakteinheit, welche einen Bremswiderstand zuschaltet.

Es besteht allerdings das Bedürfnis, dass auch bei Wechselstrom-Lokomotiven die Zugsammelschiene mit einem Erdungstrenner geerdet wird. Um dieses Ziel zu erreichen, kann ein zweiter separater Erdungstrenner für die Zugsammelschiene installiert werden. Allerdings ist dafür zusätzlicher Einbauraum erforderlich, bei dem auch eine gute Zugänglichkeit zur Bedienung nötig ist.

Es besteht also die Aufgabe, bei Wechselstrom-Lokomotiven eine Erdung der Zugsammelschiene mit guter Bedienbarkeit und geringem Platzverbrauch zu ermöglichen.

Diese Aufgabe wird durch eine Schaltungsanordnung mit einem Multikontakt-Erdungstrenner gemäß Patentanspruch 1, ein Schienenfahrzeug gemäß Patentanspruch 6 und ein Verfahren zum Herstellen eines Erdungstrenners gemäß Patentanspruch 7 gelöst.

Die erfindungsgemäße Schaltungsanordnung weist einen ersten Hochspannungskreis mit mindestens einem Stromabnehmer und mindestens einem Hauptschalter auf. Weiterhin umfasst die erfindungsgemäße Schaltungsanordnung mindestens einen zweiten Hochspannungskreis mit einem Hauptschalter und einem Transformator und eine Zugsammelschiene. Die erfindungsgemäße Schaltungsanordnung weist auch einen Multikontakt-Erdungstrenner auf.

Der Multikontakt-Erdungstrenner weist einen ersten und einen zweiten festen Erdungskontakt, jeweils für einen der Hochspannungskreise, und einen dritten festen Erdungskontakt für die Zugsammelschiene auf. Ein solcher fester Erdungskontakt umfasst einen Kontakt auf der Seite des Hochspannungskreises oder der Zugsammelschiene, welcher mit einem Erdpotential elektrisch verbunden werden kann, um sicherzustellen, dass der Hochspannungskreis oder die Zugsammelschiene auf Erdpotential liegen, so dass, beispielsweise zu Wartungszwecken, gefahrlos an dem geerdeten Hochspannungskreis oder der geerdeten Zugsammelschiene gearbeitet werden kann. Im regulären Betrieb ist die elektrische Verbindung zwischen dem Erdungskontakt und dem Erdpotential unterbrochen, so dass an dem Hochspannungskreis oder der Zugsammelschiene die jeweilige bestimmungsgemäße elektrische Betriebsspannung anliegt. Es soll an dieser Stelle erwähnt werden, dass der erfindungsgemäße Multikontakt-Erdungstrenner noch weitere feste Erdungskontakte zu weiteren Hochspannungskreisen haben kann und die Aufzählung von zwei Hochspannungskreisen keineswegs den beanspruchten Gegenstand auf zwei solche Hochspannungskreise beschränken soll.

Weiterhin umfasst der Multikontakt-Erdungstrenner einen manuell betätigbaren Erdungshebel, der drei mechanisch verbundene bewegliche Erdungskontakte aufweist. Die drei beweglichen Erdungskontakte sind derart angeordnet, dass sie bei einem Erdschluss einen jeweiligen festen Erdungskontakt elektrisch kontaktieren. Also ein erster beweglicher Erdungskontakt kontaktiert in diesem Schaltzustand den ersten festen Erdungskontakt, ein zweiter beweglicher Erdungskontakt kontaktiert den zweiten festen Erdungskontakt und ein dritter beweglicher Erdungskontakt kontaktiert den dritten festen Erdungskontakt. Es soll an dieser Stelle erwähnt werden, dass die Anzahl der beweglichen Erdungskontakte gleich der Anzahl der festen Erdungskontakt ist. Werden mehr als drei feste Erdungskontakte für mehr als zwei Hochspannungskreise und eine Stromsammelschiene vorgesehen, so umfasst der Erdungshebel entsprechend auch mehr als drei bewegliche Erdungskontakte.

Die drei mechanisch verbundenen beweglichen Erdungskontakte umfassen also jeweils ein einem der festen Erdungskontakte zugeordnetes, elektrisch leitendes Kontaktelement, welches im geschlossenen Zustand mit dem jeweiligen festen Erdungskontakt im elektrisch leitenden Kontakt steht. Hierzu sind die beweglichen Erdungskontakte in passendem Abstand zueinander und an passenden Positionen des Erdungshebels angeordnet. Bei einem solchen Kontaktpaar aus einem festen und einem beweglichen Erdungskontakt können sowohl der feste Erdungskontakt als auch der bewegliche Erdungskontakt als Buchse oder Stecker ausgeführt sein.

Der manuell betätigbare Erdungshebel ist dazu eingerichtet, die mechanisch verbundenen beweglichen Erdungskontakte simultan zu betätigen. Der Erdungshebel umfasst einen Kontaktarm, an dem die beweglichen Erdungskontakte angeordnet sind. Weiterhin umfasst der Erdungshebel einen Kraftarm oder Betätigungshebel, den eine Wartungsperson mit ihrer Hand ergreifen und schwenken kann und der fest mit dem Erdungshebel verbunden ist. Hierzu kann der Betätigungshebel einen Handgriff umfassen. Der Betätigungshebel bzw. seine Längsachse ist bevorzugt senkrecht oder annähernd senkrecht zu dem Erdungshebel bzw. dessen Längsachse orientiert. Weiterhin ist der Erdungshebel auf einem Angelpunkt als Schwenkachse gelagert, um den der Erdungshebel durch eine Betätigung des Betätigungshebels durch eine Wartungsperson geschwenkt werden kann. Wird nun der Erdungshebel in Richtung der festen Erdungskontakte geschwenkt, so gelangen die beweglichen Erdungskontakte simultan in Kontakt mit den festen Erdungskontakten. Umgekehrt wird der Kontakt zwischen den festen und beweglichen Erdungskontakten simultan gelöst, wenn der Erdungshebel in die entgegengesetzte Richtung geschwenkt wird.

Es soll an dieser Stelle erwähnt werden, dass die Angabe der Anzahl von Erdungskontakten, d.h. zwei Erdungskontakte für zwei Hochspannungskreise und ein Erdungskontakt für eine Stromsammelschiene, zwar die bevorzugt Ausführungsform beschreibt, aber ebenfalls nicht beschränkend sein soll, sondern bei einem Vorliegen einer erhöhten Anzahl von Hochspannungskreisen oder Stromsammelschienen auch entsprechend mehr feste und bewegliche Erdungskontakte in dem erfindungsgemäßen Multikontakt-Erdungstrenner vorgesehen sein können.

Weiterhin umfasst der Multikontakt-Erdungstrenner der erfindungsgemäßen Schaltungsanordnung eine elektrische Verbindung des Erdungshebels mit dem Erdpotential. Vorteilhaft kann durch den zusätzlichen Erdungskontakt zum Erden der Zugsammelschiene am Multikontakt-Erdungstrenner für die Hochspannungsstromkreise ein zusätzlicher separater Erdungstrenner für die Zugsammelschiene eingespart werden. Der sonst dafür erforderliche Einbauraum ist auf einer Lokomotive oft nicht vorhanden oder kann nur mit großem Aufwand gewonnen werden. Mithin werden die Kosten für einen zusätzlichen Erdungstrenner eingespart. Zudem vereinfacht sich die Erdungsprozedur, weil ein Erdungstrenner einschließlich der zugehörige Verriegelungsschlüssel weniger betätigt werden muss, als es bei dem Einsatz eines separaten Erdungstrenners für die Zugsammelschiene der Fall wäre. Außerdem kann bei einer Wechselstrom-Lokomotive der vorhandene Erdungstrenner einfach mit einem dritten Kontakt zum Erden der Zugsammelschiene nachgerüstet werden, um die Forderung von Betreibern, die Zugsammelschiene zu erden, zu erfüllen. Ein Verriegelungsschlüssel dient dazu, sicherzustellen, dass der Erdungstrenner bzw. der Erdungshebel des Erdungstrenners nur von einer befugten Person, welche Zugang zum Verriegelungsschlüssel hat, betätigt wird.

Die erfindungsgemäße Schaltungsanordnung weist also einen ersten Hochspannungskreis mit mindestens einem Stromabnehmer und mindestens einem Hauptschalter auf. Anders ausgedrückt, befindet sich der erste Hochspannungskreis zwischen dem Stromabnehmer und dem Hauptschalter. Außerdem umfasst die erfindungsgemäße Schaltungsanordnung mindestens einen zweiten Hochspannungskreis mit dem Hauptschalter und einem Transformator sowie eine Zugsammelschiene. D. h., der zweite Hochspannungskreis befindet sich zwischen dem Hauptschalter und dem Transformator. Der zweite Hochspannungskreis umfasst zum Beispiel einen Primärstromwandler. Der erste und der zweite Hochspannungskreis sind über den Hauptschalter miteinander seriell gekoppelt. Außerdem umfasst die erfindungsgemäße Schaltungsanordnung den erwähnten Multikontakt-Erdungstrenner.

Das erfindungsgemäße Schienenfahrzeug, weist die erfindungsgemäße Schaltungsanordnung auf. Das Schienenfahrzeug umfasst außerdem vorzugsweise auch zusätzliche Funktionselemente, insbesondere einen Haupttransformator und einen Hauptschalter zum Kontaktieren des Haupttransformators mit dem Bahnstromnetz. Das Schienenfahrzeug teilt die Vorteile der erfindungsgemäßen Schaltungsanordnung.

Bei dem erfindungsgemäßen Verfahren zum Herstellen einer Schaltungsanordnung mit einem Multikontakt-Erdungstrenners wird ein erster Hochspannungskreis mit mindestens einem Stromabnehmer und mindestens einem Hauptschalter hergestellt. Weiterhin wird mindestens ein zweiter Hochspannungskreis mit einem Hauptschalter und einem Transformator hergestellt. Zudem erfolgt das Herstellen einer Zugsammelschiene.

Bei dem erfindungsgemäßen Verfahren wird nun ein erster und ein zweiter fester Erdungskontakt jeweils für einen der Hochspannungskreise hergestellt. Zudem wird ein dritter fester Erdungskontakt für die Zugsammelschiene hergestellt. Weiterhin wird ein manuell betätigbarer Erdungshebel als Teil des Multikontakt-Erdungstrenners hergestellt. Der manuell betätigbare Erdungshebel wird derart ausgebildet, dass er drei mechanisch verbundene bewegliche Erdungskontakte, welche derart angeordnet werden, dass sie bei einem Erdschluss einen jeweiligen festen Erdungskontakt elektrisch kontaktieren, aufweist. Weiterhin wird der manuell betätigbare Erdungshebel dazu eingerichtet, die mechanisch verbundenen beweglichen Erdungskontakte simultan zu betätigen. Schließlich wird eine elektrische Verbindung des Erdungshebels mit einem Erdpotential hergestellt. Vorteilhaft kann bei dem Herstellungsprozess ein dritter beweglicher Erdungskontakt in einen bereits vorhandenen Erdungstrenner zum Erden von Hochspannungskreisen integriert werden. Vorteilhaft kann dadurch die Installation eines separaten zusätzlichen Erdungskontakts zum Erden der Zugsammelschiene vermieden werden. Der Herstellungsaufwand für Einrichtungen zur Implementierung der nötigen Erdung der Hochspannungsstromkreise ist also im Vergleich zu herkömmlichen Anordnungen, insbesondere mit einer separaten Erdung der Zugsammelschiene, reduziert.

Die abhängigen Ansprüche sowie die nachfolgende Beschreibung enthalten jeweils besonders vorteilhafte Ausgestaltungen und Weiterbildungen der Erfindung. Zudem können im Rahmen der Erfindung die verschiedenen Merkmale unterschiedlicher Ausführungsbeispiele und Ansprüche auch zu neuen Ausführungsbeispielen kombiniert werden.

Bevorzugt sind bei der erfindungsgemäßen Schaltungsanordnung die drei festen Erdungskontakte voneinander derart beabstandet, dass ein für ein hochspannungsführendes Bauteil notwendiger Mindestabstand zwischen den festen Erdungskontakten sowie zwischen den festen Erdungskontakten und dem Erdungspotential eingehalten wird. Vorteilhaft kann ein Überspringen zwischen den festen Erdungskontakten vermieden werden und so eine Beschädigung von elektrischen oder elektronischen Bauelementen vermieden werden.

Dabei ist der notwendige Mindestabstand vorzugsweise derart gewählt, dass er für eine Hochspannung von 25 kV ausreicht. Der Nennwert von 25 kV entspricht der höchsten verwendeten Wechselspannung im Schienenverkehr. Der Abstand wird in der EN 50124-1 (europäische Norm) definiert. Er ist aber von der Spannungshöhe, von der Überspannungskategorie und vom Verschmutzungsgrad abhängig. Vorteilhaft kann der erfindungsgemäße Multikontakt-Erdungstrenner in unterschiedlichen Stromversorgungsnetzen mit unterschiedlichen Spannungswerten eingesetzt werden.

Besonders bevorzugt weist der dritte feste Erdungskontakt des Multikontakt-Erdungstrenners gegenüber dem Erdpotential einen für eine maximale Nennspannung einer Zugsammelschiene notwendigen Mindestabstand auf. Weil die maximale Zugsammelschienenspannung (Nennspannung 3000 V, Maximalspannung 3600 V, eine typische gewählte Auslegungsspannung 4000 V), die Überspannungskategorie OV3 und der Verschmutzungsgrad PD3 (Innenraum) feststehen, ergibt sich ein Spannungsabstand von mindestens 32 mm. Vorteilhaft kann bei geöffnetem Erdungstrenner ein Überspringen des von der Zugsammelschiene geführten Gleichstroms nach Erde vermieden werden. Meist weist die maximale Nennspannung des von der Zugsammelschiene geführten elektrischen Stroms einen Wert von 3kV auf.

Die Erfindung wird im Folgenden unter Hinweis auf die beigefügten Figuren anhand von Ausführungsbeispielen noch einmal näher erläutert. Es zeigen:
FIG 1 eine schematische Darstellung eines herkömmlichen Schienenfahrzeugs,
FIG 2 eine schematische Darstellung eines Multikontakt-Erdungstrenners einer Schaltungsanordnung gemäß einem Ausführungsbeispiel der Erfindung,
FIG 3 eine detaillierte Darstellung des bereits in FIG 2 schematisch dargestellten Multikontakt-Erdungstrenners,
FIG 4 ein Flussdiagramm, welches ein Verfahren zum Herstellen eines Multikontakt-Erdungstrenners veranschaulicht,
FIG 5 eine schematische Darstellung eines Schienenfahrzeugs gemäß einem Ausführungsbeispiel der Erfindung.

In FIG 1 wird eine schematische Darstellung eines elektrifizierten Schienenfahrzeugs 1 veranschaulicht. Das elektrifizierte Schienenfahrzeug 1, in diesem Fall ein Schienenfahrzeug ausschließlich zum Betrieb mit Wechselspannung, umfasst zur Versorgung mit elektrischer Energie aus einer Oberleitung OL, in diesem Fall einem Wechselspannungsbahnstromnetz, einen Pantographen 2, der über einen Hauptschalter 3 mit einem Primärstromwandler PW elektrisch verbunden ist. Der Primärstromwandler PW wandelt den Primärwechselstrom in Bereichen bis 1200 A für Messzwecke in kleinere Sekundärströme. Dem Primärstromwandler PW nachgeschaltet ist ein Haupttransformator 4, der die Hochspannung heruntertransformiert. Mit dem Haupttransformator 4 elektrisch verbunden sind zwei Stromrichter 6, die den einphasigen Wechselstrom in dreiphasigen Wechselstrom umwandeln.

In FIG 2 ist eine schematische Darstellung einer Schaltungsanordnung 20 gemäß einem Ausführungsbeispiel der Erfindung gezeigt. Die Schaltungsanordnung 20 umfasst einen ersten Hochspannungskreis 21 zwischen einem Stromabnehmer 2 und einem Hauptschalter 3, welcher in FIG 2 oben links gezeigt ist. Der Stromabnehmer selbst ist in FIG 2 nicht gezeigt. Es ist aber die Richtung des elektrischen Stroms bzw. des Energieflusses von dem Stromabnehmer hin zu dem Hauptschalter mit einem Pfeil dargestellt.

Weiterhin umfasst die Schaltungsanordnung 20 einen zweiten Hochspannungskreis 22 zwischen dem Hauptschalter 3 und dem Haupttransformator 4. Der Haupttransformator 4 selbst ist in dem Schaltbild in FIG 2 nicht dargestellt. Allerdings ist die Richtung zum Haupttransformator hin mit einem Pfeil dargestellt.

Zudem umfasst die Schaltungsanordnung 20 einen dritten Spannungskreis 23 mit einer Zugsammelschiene 5**.** Die Zugsammelschiene 5 selbst ist in dem Schaltbild in FIG 2 nicht dargestellt. Allerdings ist die Richtung zum Haupttransformator hin mit einem Pfeil dargestellt.

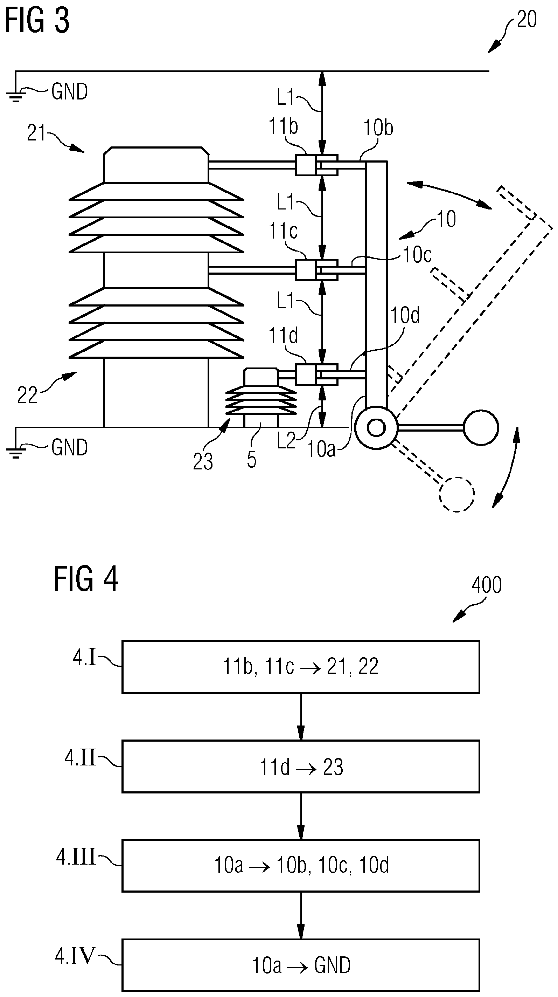

Schließlich umfasst die Schaltungsanordnung 20 einen Multikontakt-Erdungstrenner 10 gemäß einem Ausführungsbeispiel der Erfindung, der in FIG 2 auf der rechten Seite gezeigt ist. Der Multikontakt-Erdungstrenner 10 umfasst einen Erdungshebel 10a (in FIG 2 nicht gezeigt, siehe FIG 3), der dazu eingerichtet ist, einen elektrischen Kontakt zwischen den in FIG 2 dargestellten Hochspannungskreisen 21, 22 und der Zugsammelschiene 5 auf der einen Seite und dem Erdungspotential GND auf der anderen Seite herzustellen. In dem Stromlaufplan kann der Erdungsarm 10a (siehe FIG 3) als konstruktives Bauteil nicht dargestellt werden. Der Multikontakt-Erdungstrenner 10 umfasst einen ersten beweglichen Erdungskontakt 10b, der dazu eingerichtet ist, einen Kontakt zwischen dem ersten Hochspannungskreis 21 und dem Erdungspotential GND herzustellen. Zudem umfasst der Multikontakt-Erdungstrenner 10 einen zweiten beweglichen Erdungskontakt 10c, der dazu eingerichtet ist, einen Kontakt zwischen dem zweiten Hochspannungskreis 22 und dem Erdungspotential GND herzustellen. Weiterhin umfasst der Multikontakt-Erdungstrenner 10 einen dritten beweglichen Erdungskontakt 10d, welcher dazu eingerichtet ist, einen elektrischen Kontakt zwischen dem dritten Spannungskreis 23 und dem Erdungspotential GND herzustellen.

In FIG 3 ist die in FIG 2 bereits als Stromlaufplan veranschaulichte Schaltungsanordnung 20 nochmals im Detail als Konstruktionsplan illustriert. In FIG 3 sind die festen Erdungskontakte 11b, 11c, 11d der zwei Hochspannungskreise 21, 22 und des dritten Spannungskreises 23 mit dem Multikontakt-Erdungstrenner 10 mit den beweglichen Erdungskontakten 10b, 10c, 10d im Detail zu erkennen. Die festen Erdungskontakte 11b, 11c, 11d bilden mit den beweglichen Erdungskontakten 10b, 10c, 10d bei einem Erdungsvorgang einen festen elektrischen Kontakt.

Der Multikontakt-Erdungstrenner 10 umfasst außerdem einen Erdungshebel 10a, an dem die drei beweglichen Erdungskontakte 10b, 10c, 10d angeordnet sind. Der Multikontakt-Erdungstrenner 10 ist also so ausgebildet, dass durch ein Betätigen bzw. Schwenken des Erdungshebels 10a nach links bzw. gegen den Uhrzeigersinn die beiden Hochspannungskreise 21, 22 und die Zugsammelschiene 5 gleichzeitig mit dem Erdpotential GND elektrisch verbunden werden können und durch Schwenken des Erdungshebels 10a nach rechts auch gleichzeitig von dem Erdpotential GND getrennt werden können.

In FIG 4 ist ein Flussdiagramm 400 dargestellt, welches ein Verfahren zum Herstellen eines Multikontakt-Erdungstrenners 10 veranschaulicht. Bei dem Schritt 4.I werden ein erster und ein zweiter fester Erdungskontakt 11b, 11c jeweils für einen Hochspannungskreis 21, 22 eingerichtet.

Bei dem Schritt 4.II wird ein dritter fester Erdungskontakt 11d für den dritten Spannungskreis 23, der mit einer Zugsammelschiene 5 verbunden ist, erstellt.

Bei dem Schritt 4.III wird ein manuell betätigbarer Erdungshebel 10a mit drei mechanisch verbundenen beweglichen Erdungskontakten 10b, 10c, 10d versehen und auf einer Schwenkachse als Angelpunkt montiert, so dass die mechanisch verbundenen beweglichen Erdungskontakte 10b, 10c, 10d simultan betätigbar sind.

Bei dem Schritt 4.IV wird eine elektrische Verbindung des Erdungshebels 10a mit dem Erdpotential GND hergestellt.

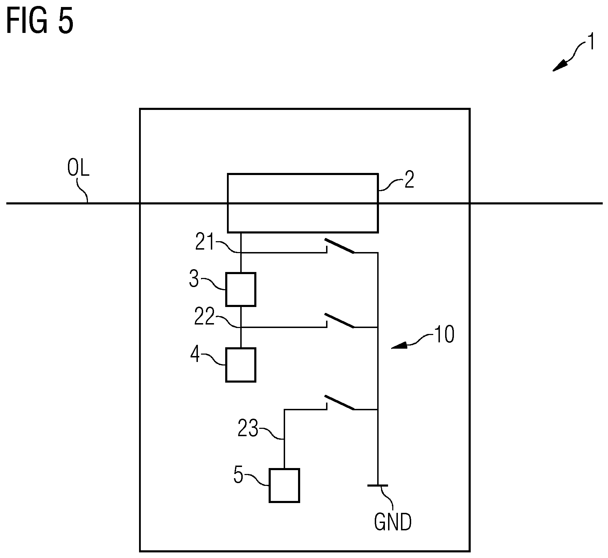

In FIG 5 ist ein Schienenfahrzeug 1 schematisch dargestellt. Das Schienenfahrzeug 1 steht über seinen Stromabnehmer 2 in elektrischem Kontakt mit einer Oberleitung OL. Es umfasst einen Hauptschalter 3, mit dem eine elektrische Verbindung zwischen dem Stromabnehmer 2 und einem Haupttransformator 4, der ebenfalls Teil des Schienenfahrzeugs 1 ist, unterbrochen und hergestellt werden kann. Weiterhin umfasst das Schienenfahrzeug 1 eine Zugsammelschiene 5, die einen elektrischen Kontakt des Schienenfahrzeugs 1 mit angehängten Wagen (nicht gezeigt) zur Versorgung der Wagen mit elektrischer Energie herstellt. Zudem umfasst das Schienenfahrzeug 1 einen Multikontakt-Erdungstrenner 10, der einen ersten Hochspannungskreis 21, der sich zwischen dem Stromabnehmer 2 und dem Hauptschalter 3 befindet, einen zweiten Hochspannungskreis 22, der sich zwischen dem Hauptschalter 3 und dem Haupttransformator 4 befindet und einen von der Zugsammelschiene 5 gebildeten dritten Spannungskreis 23 mit dem Erdpotential GND elektrisch verbindet.

Es wird abschließend noch einmal darauf hingewiesen, dass es sich bei den vorbeschriebenen Verfahren und Vorrichtungen lediglich um bevorzugte Ausführungsbeispiele der Erfindung handelt und dass die Erfindung vom Fachmann variiert werden kann, ohne den Bereich der Erfindung zu verlassen, soweit er durch die Ansprüche vorgegeben ist. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können. Weiterhin soll erwähnt werden, dass die Angabe der Anzahl von Erdungskontakten ebenfalls nicht beschränkend sein soll, sondern bei einem Vorliegen einer erhöhten Anzahl von Hochspannungskreisen oder Stromsammelschienen auch entsprechend mehr feste und bewegliche Erdungskontakte in dem erfindungsgemäßen Multikontakt-Erdungstrenner vorgesehen sein können. Unabhängig vom grammatikalischen Geschlecht eines bestimmten Begriffes sind Personen mit männlicher, weiblicher oder anderer Geschlechteridentität mit umfasst.

## Patentansprüche

1. Schaltungsanordnung (20), aufweisend:
- einen ersten Hochspannungskreis (21) mit mindestens einem Stromabnehmer (2) und mindestens einem Hauptschalter (3),
- mindestens einen zweiten Hochspannungskreis (22) mit einem Hauptschalter (3) und einem Transformator (4),
- eine Zugsammelschiene (5),
- einen Multikontakt-Erdungstrenner (10), aufweisend:
- einen ersten und einen zweiten festen Erdungskontakt (11b, 11c), jeweils für einen der Hochspannungskreise (21, 22), auf der Seite des jeweiligen Hochspannungskreises (21, 22), zur elektrischen Verbindung des jeweiligen Hochspannungskreises (21, 22) mit einem Erdpotential (GND),
- **gekennzeichnet durch**
einen dritten festen Erdungskontakt (11d) für die Zugsammelschiene (5), auf der Seite der Zugsammelschiene (5), zur elektrischen Verbindung der Zugsammelschiene (5) mit dem Erdpotential (GND),
- einen manuell betätigbaren Erdungshebel (10a), der drei mechanisch verbundene, bewegliche Erdungskontakte (10b, 10c, 10d), welche derart angeordnet sind, dass sie bei einem Erdschluss einen jeweiligen festen Erdungskontakt (11b, 11c, 11d) elektrisch kontaktieren, aufweist und dazu eingerichtet ist, die mechanisch verbundenen beweglichen Erdungskontakte (10b, 10c, 10d) simultan zu betätigen,
- eine elektrische Verbindung des Erdungshebels (10a) mit dem Erdpotential (GND).

2. Schaltungsanordnung (20) nach Anspruch 1, wobei die drei festen Erdungskontakte (11b, 11c, 11d) voneinander derart beabstandet sind, dass ein für ein hochspannungsführendes Bauteil notwendiger Mindestabstand (L1) zwischen den festen Erdungskontakten (11b, 11c, 11d) sowie zwischen den festen Erdungskontakten (11b, 11c) und Erdungspotential (GND) eingehalten wird.

3. Schaltungsanordnung (20) nach Anspruch 2, wobei der notwendige Mindestabstand (L1) derart gewählt wird, dass er für eine Hochspannung von 25 kV ausreicht.

4. Schaltungsanordnung (20) nach einem der vorstehenden Ansprüche 1 oder 2, wobei der dritte feste Erdungskontakt (11d) gegenüber dem Erdpotential (GND) einen für eine maximale Nennspannung einer Zugsammelschiene (5) notwendigen Mindestabstand (L2) aufweist.

5. Schaltungsanordnung (20) nach Anspruch 4, wobei die maximale Nennspannung einen Wert von 3kV aufweist.

6. Schienenfahrzeug (1), aufweisend eine Schaltungsanordnung (10) nach einem der vorstehenden Ansprüche.

7. Verfahren zum Herstellen einer Schaltungsanordnung (20) mit einem Multikontakt-Erdungstrenners (10), aufweisend die Schritte:
- Herstellen eines ersten Hochspannungskreises (21) mit mindestens einem Stromabnehmer (2) und mindestens einem Hauptschalter (3),
- Herstellen mindestens eines zweiten Hochspannungskreises (22) mit einem Hauptschalter (3) und einem Transformator (4),
- Herstellen einer Zugsammelschiene (5),
- Herstellen eines ersten und eines zweiten festen Erdungskontakts (11b, 11c), jeweils für einen der Hochspannungskreise (21, 22), auf der Seite des jeweiligen Hochspannungskreises (21, 22), zur elektrischen Verbindung des jeweiligen Hochspannungskreises (21, 22) mit einem Erdpotential (GND),
- Herstellen eines dritten festen Erdungskontakts (11d) für die Zugsammelschiene (5), auf der Seite der Zugsammelschiene (5), zur elektrischen Verbindung der Zugsammelschiene (5) mit dem Erdpotential (GND),
- Herstellen eines manuell betätigbaren Erdungshebels (10a), der drei mechanisch verbundene bewegliche Erdungskontakte (10b, 10c, 10d), welche derart angeordnet sind, dass sie bei einem Erdschluss einen jeweiligen festen Erdungskontakt (11b, 11c, 11d) elektrisch kontaktieren, aufweist und dazu eingerichtet ist, die mechanisch verbundenen beweglichen Erdungskontakte (10b, 10c, 10d) simultan zu betätigen,
- Herstellen einer elektrischen Verbindung des Erdungshebels (10a) mit dem Erdpotential (GND).

## Claims

1. Circuit arrangement (20), comprising:
- a first high-voltage circuit (21) with at least one current collector (2) and at least one main switch (3),
- at least one second high-voltage circuit (22) with a main switch (3) and a transformer (4),
- a train busbar (5),
- a multi-contact earthing disconnector (10), comprising:
- a first and a second fixed earthing contact (11b, 11c), in each case for one of the high-voltage circuits (21, 22), on the side of the respective high-voltage circuit (21, 22) for electrically connecting the respective high-voltage circuit (21, 22) to an earth potential (GND),
- **characterized by** a third fixed earthing contact (11d) for the train busbar (5), on the side of the train busbar (5), for electrically connecting the train busbar (5) to the earth potential (GND),
- a manually actuatable earthing lever (10a) that comprises three mechanically connected, movable earthing contacts (10b, 10c, 10d), which are arranged in such a way that they make electrical contact with a respective fixed earthing contact (11b, 11c, 11d) in the event of an earth fault, and is configured to simultaneously actuate the mechanically connected movable earthing contacts (10b, 10c, 10d),
- an electrical connection between the earthing lever (10a) and the earth potential (GND).

2. Circuit arrangement (20) according to Claim 1, wherein the three fixed earthing contacts (11b, 11c, 11d) are spaced apart from one another in such a way that a minimum spacing (L1) between the fixed earthing contacts (11b, 11c, 11d) and between the fixed earthing contacts (11b, 11c) and earthing potential (GND), necessary for a high-voltage-carrying component, is maintained.

3. Circuit arrangement (20) according to Claim 2, wherein the necessary minimum spacing (L1) is selected in such a way that it is sufficient for a high voltage of 25 kV.

4. Circuit arrangement (20) according to either of the preceding Claims 1 and 2, wherein the third fixed earthing contact (11d) has a minimum spacing (L2) with respect to the earth potential (GND) that is necessary for a maximum nominal voltage of a train busbar (5).

5. Circuit arrangement (20) according to Claim 4, wherein the maximum nominal voltage has a value of 3 kV.

6. Rail vehicle (1), comprising a circuit arrangement (10) according to one of the preceding claims.

7. Method for producing a circuit arrangement (20) with a multi-contact earthing disconnector (10), comprising the steps of:
- producing a first high-voltage circuit (21) with at least one current collector (2) and at least one main switch (3),
- producing at least one second high-voltage circuit (22) with a main switch (3) and a transformer (4),
- producing a train busbar (5),
- producing a first and a second fixed earthing contact (11b, 11c), in each case for one of the high-voltage circuits (21, 22), on the side of the respective high-voltage circuit (21, 22) for electrically connecting the respective high-voltage circuit (21, 22) to an earth potential (GND),
- producing a third fixed earthing contact (11d) for the train busbar (5), on the side of the train busbar (5), for electrically connecting the train busbar (5) to the earth potential (GND),
- producing a manually actuatable earthing lever (10a) that comprises three mechanically connected, movable earthing contacts (10b, 10c, 10d), which are arranged in such a way that they make electrical contact with a respective fixed earthing contact (11b, 11c, 11d) in the event of an earth fault, and is configured to simultaneously actuate the mechanically connected movable earthing contacts (10b, 10c, 10d),
- establishing an electrical connection between the earthing lever (10a) and the earth potential (GND).

## Revendications

1. Circuit (20), comprenant :
- un premier circuit haute tension (21) avec au moins un collecteur de courant (2) et au moins un interrupteur principal (3),
- au moins un deuxième circuit haute tension (22) avec un interrupteur principal (3) et un transformateur (4),
- une ligne de train (5),
- un commutateur de mise à la terre à contacts multiples (10), comprenant :
- un premier et un deuxième contact de mise à la terre fixe (11b, 11c), respectivement pour l'un des circuits haute tension (21, 22), du côté du circuit haute tension (21, 22) respectif, pour la connexion électrique du circuit haute tension (21, 22) respectif à un potentiel de mise à la terre (GND),
- **caractérisé par** un troisième contact de mise à la terre fixe (11d) pour la ligne de train (5), du côté de la ligne de train (5), pour la connexion électrique de la ligne de train (5) au potentiel de mise à la terre (GND),
- un levier de mise à la terre à commande manuelle (10a) qui comprend trois contacts de mise à la terre mobiles (10b, 10c, 10d) et reliés mécaniquement, qui sont disposés de sorte à entrer en contact électrique avec un contact de mise à la terre fixe (11b, 11c, 11d) respectif en cas de défaut à la terre, et qui est conçu pour actionner simultanément les contacts de mise à la terre mobiles (10b, 10c, 10d) et reliés mécaniquement,
- une connexion électrique du levier de mise à la terre (10a) au potentiel de mise à la terre (GND).

2. Circuit (20) selon la revendication 1, dans laquelle les trois contacts de mise à la terre fixes (11b, 11c, 11d) sont espacés les uns des autres de sorte qu'une distance minimale (L1) nécessaire pour un composant conducteur de haute tension soit respectée entre les contacts de mise à la terre fixes (11b, 11c, 11d) ainsi qu'entre les contacts de mise à la terre fixes (11b, 11c) et le potentiel de mise à la terre (GND).

3. Circuit (20) selon la revendication 2, dans laquelle la distance minimale (L1) nécessaire est choisie de sorte à être suffisante pour une haute tension de 25 kV.

4. Circuit (20) selon l'une des revendications 1 ou 2 précédentes, dans laquelle le troisième contact de mise à la terre fixe (11d) comprend, par rapport au potentiel de mise à la terre (GND), une distance minimale (L2) nécessaire pour une tension nominale maximale d'une ligne de train (5).

5. Circuit (20) selon la revendication 4, dans laquelle la tension nominale maximale comprend une valeur de 3 kV.

6. Véhicule ferroviaire (1) comprenant un circuit (10) selon l'une des revendications précédentes.

7. Procédé pour l'établissement d'un circuit (20) avec un commutateur de mise à la terre à contacts multiples (10), comprenant les étapes suivantes :
- établissement d'un premier circuit haute tension (21) avec au moins un collecteur de courant (2) et au moins un interrupteur principal (3),
- établissement d'au moins un deuxième circuit haute tension (22) avec un interrupteur principal (3) et un transformateur (4),
- établissement d'une ligne de train (5),
- établissement d'un premier et d'un deuxième contact de mise à la terre fixe (11b, 11c), respectivement pour l'un des circuits haute tension (21, 22), du côté du circuit haute tension (21, 22) respectif, pour la connexion électrique du circuit haute tension (21, 22) respectif à un potentiel de mise à la terre (GND),
- établissement d'un troisième contact de mise à la terre fixe (11d) pour la ligne de train (5), du côté de la ligne de train (5), pour la connexion électrique de la ligne de train (5) au potentiel de mise à la terre (GND),
- établissement d'un levier de mise à la terre à commande manuelle (10a) qui comprend trois contacts de mise à la terre mobiles (10b, 10c, 10d) et reliés mécaniquement, qui sont disposés de sorte à entrer en contact électrique avec un contact de mise à la terre fixe (11b, 11c, 11d) respectif en cas de défaut à la terre, et qui est conçu pour actionner simultanément les contacts de mise à la terre mobiles (10b, 10c, 10d) et reliés mécaniquement,
- établissement d'une connexion électrique entre le levier de mise à la terre (10a) et le potentiel de mise à la terre (GND) .
